# EUROPÄISCHE PATENTSCHRIFT

(11) **EP 2 289 016 B1**
(45) Veröffentlichungstag und Bekanntmachung des Hinweises auf die Patenterteilung: **02.11.2011**
(21) Anmeldenummer: 09727662.0
(22) Anmeldetag: 16.02.2009
(51) Int. Cl.: G06F 21/24

(54) **VERWENDUNG EINES MOBILEN TELEKOMMUNIKATIONSGERÄTS ALS ELEKTRONISCHE GESUNDHEITSKARTE**
USE OF A MOBILE TELECOMMUNICATION DEVICE AS AN ELECTRONIC HEALTH INSURANCE CARD
UTILISATION D'UN APPAREIL DE TÉLÉCOMMUNICATION MOBILE COMME CARTE DE SANTÉ ÉLECTRONIQUE

(30) Priorität: 31.03.2008 DE 102008000895
(43) Veröffentlichungstag der Anmeldung: 02.03.2011
(73) Patentinhaber: CompuGroup Medical AG, 56070 Koblenz (DE)
(72) Erfinder: GOTTHARDT, Frank, 56337 Eitelborn (DE)
(74) Vertreter: Richardt Patentanwälte
(86) Internationale Anmeldenummer: PCT/EP2009/051818
(87) Internationale Veröffentlichungsnummer: WO 2009/121658

(56) Entgegenhaltungen:
- WO-A1-99/14652
- DE-A1-102006 057 201
- US-A1- 2005 273 604

## Beschreibung

Die Erfindung betrifft ein Verfahren zur Entschlüsselung eines medizinischen Datenobjekts durch ein Datenverarbeitungssystem, ein Verfahren zur Entschlüsselung eines verschlüsselten Datenobjektschlüssels, wobei die Entschlüsselung durch ein mobiles Telekommunikationsgerät erfolgt, sowie ein Datenverarbeitungssystem, ein mobiles Telekommunikationsgerät und entsprechende Computerprogrammprodukte zur Durchführung der erfindungsgemäßen Verfahren.

Die elektronische Gesundheitskarte, abgekürzt eGK, soll seit Beginn des Jahres 2006 die Krankenversicherungskarte in Deutschland ersetzen. Ziel ist es dabei, eine Datenübermittlung zwischen medizinischen Leistungserbringem, Krankenkassen, Apotheken und Patienten in Zukunft kostengünstiger zu gestalten zu vereinfachen und zu beschleunigen. Dazu gehört unter anderem auch die Ermöglichung eines Zugriffs auf einen elektronischen Arztbrief, einer elektronischen Krankenakte, sowie des elektronischen Rezeptes mit Hilfe der elektronischen Gesundheitskarte. Auf der elektronischen Gesundheitskarte ist aufgrund des dort verfügbaren geringen Speicherplatzes nur ein gewisser Teil von Pflichtangaben gespeichert. So sind z. B. Angaben zur Identität des Patienten, zur Notfallversorgung und optional auch Vermerke, z. B. zum Organspenderstatus des Patienten auf der Karte gespeichert. Der Zugriff auf Dokumentationen zu eingenommenen Medikamenten, dem elektronischen Arztbrief, der elektronischen Krankenakte und dem elektronischen Rezept erfolgt über gesicherte Zugangsknoten zu Fachdiensten der Telematik-Infrastruktur.

Ein wichtiger Aspekt z. B. bei der Verwendung von elektronischen Rezepten ist die Sicherheit der Verwendung solcher Rezepte, um sowohl ein unbefugtes Ausspähen von Rezeptdaten zu vermeiden, als auch eine missbräuchliche Rezeptausstellung zu verhindern. Hierzu dient z. B. die elektronische Signatur, welche von einem behandelnden Arzt unter Verwendung seines Heilberufsausweises erstellt wird.

Um jedoch eben genau den Missbrauch von elektronischen Rezeptdaten zu verhindern, ist eine weitere Verschlüsselung derselben zur Verhinderung eines unbefugten Zugriffs durch Dritte notwendig. Hier bietet sich folgende Vorgehensweise an: Bei der Ausstellung des elektronischen Rezepts durch den behandelnden Arzt wird beispielsweise durch das Arztinformationssystem ein symmetrischer zufälliger Schlüssel erzeugt, mit welchem das elektronische Rezept verschlüsselt wird. Daraufhin wird der öffentliche Schlüssel des Patienten, auch als öffentlicher elektronischer Gesundheitskartenschlüssel bezeichnet, dazu verwendet, um den symmetrischen Schlüssel zu verschlüsseln. Das so verschlüsselte Rezept kann nun zusammen mit dem verschlüsselten symmetrischen Schlüssel und der Rezeptsignatur, welche wie oben beschrieben, unter Verwendung des Heilberufsausweises des Arztes erzeugt wurde, auf einem Server abgelegt werden, welcher eine zentrale Rezeptdatenbank beinhaltet.

Um nun z. B. in einer Apotheke auf das Rezept zuzugreifen, kann anhand einer eindeutigen Patientenkennung, welche beispielsweise aus der elektronischen Gesundheitskarte auf gesicherte Art und Weise ausgelesen wird, auf das verschlüsselte elektronische Rezept zugegriffen werden und das verschlüsselte elektronische Rezept, der verschlüsselte symmetrische Schlüssel und die Signatur aus der Rezeptdatenbank auf das entsprechende Apotheken-Informationssystem geladen werden. Hier sei angemerkt, dass selbstverständlich die Signatur als separate Datei heruntergeladen werden kann, oder es ist alternativ möglich, das elektronische Rezept zusammen mit der Signatur zu verschlüsseln, so dass sich hierbei lediglich eine einzelne verschlüsselte Datei ergibt. In diesem Fall muss nur diese einzelne verschlüsselte Datei zusammen mit dem verschlüsselten symmetrischen Schlüssel heruntergeladen werden.

Nachdem nun der Patient seine elektronische Gesundheitskarte in ein entsprechendes Lesegerät des Apotheken-Informationssystems eingeführt hat, sich identifiziert hat und zur Einlösung des elektronischen Rezepts autorisiert ist, wird der mit dem öffentlichen Patientenschlüssel verschlüsselte symmetrische Schlüssel an die elektronische Gesundheitskarte übertragen. In der elektronischen Gesundheitskarte ist ein nichtauslesbarer privater Patientenschlüssel gespeichert, mit welchem der verschlüsselte Schlüssel entschlüsselt werden kann. Vorzugsweise bilden hierbei der private Patientenschlüssel und der öffentliche Patientenschlüssel ein kryptografisches asymmetrisches Schlüsselpaar.

Nachdem der symmetrische Schlüssel entschlüsselt wurde, kann das Apotheken-Informationssystem den entschlüsselten symmetrischen Schlüssel dazu verwenden, um das elektronische Rezept zu entschlüsseln. Des weiteren ist noch eine Echtheitsverifizierung der Signatur notwendig, welche vom Arzt für das entsprechende elektronische Rezept erstellt wurde.

Ein Nachteil der elektronischen Gesundheitskarte ist, dass es sich hierbei um eine Chipkarte handelt, wobei ein durchschnittlicher Patient ohnehin bereits eine Vielzahl verschiedener Chipkarten ständig bei sich führt. Dazu zählen unter anderem Kreditkarten, Ausweise im Scheckkartenformat, Geldkarten usw. Dies erhöht zum einen die Risiken eines Verlustes der elektronischen Gesundheitskarte. Zum anderen mindert dies die Bereitschaft, die elektronische Gesundheitskarte zusätzlich auch ständig bei sich zu tragen, da gewöhnlicherweise beim Durchschnittspatienten eine Verwendung der elektronischen Gesundheitskarte nur in sehr unregelmäßigen Abständen vonnöten ist.

Der Erfindung liegt demgegenüber die Aufgabe zugrunde, ein verbessertes Verfahren zu Entschlüsselung eines medizinischen Datenobjekts durch ein Datenverarbeitungssystem, ein Datenverarbeitungssystem, ein verbessertes Verfahren zur Entschlüsselung eines verschlüsselten Datenobjektes, ein mobiles Telekommunikationsgerät, sowie entsprechende verbesserte Computerprogrammprodukte zur Verfügung zu stellen.

Die der Erfindung zugrundeliegenden Aufgaben werden jeweils mit den Merkmalen der unabhängigen Patentansprüche gelöst. Bevorzugte Ausführungsformen der Erfindung sind in den abhängigen Patentansprüchen angegeben.

Erfindungsgemäß wird ein Verfahren zur Entschlüsselung eines medizinischen Datenobjekts durch ein Datenverarbeitungssystem geschaffen, wobei das medizinische Datenobjekt mit einem Datenobjektschlüssel verschlüsselt ist, wobei dem medizinischen Datenobjekt eine Signatur und der mit einem ersten Gesundheitskartenschlüssel verschlüsselte Datenobjektschlüssel zugeordnet ist, wobei das medizinische Datenobjekt dem ersten Gesundheitskartenschlüssel zugeordnet ist. Das Verfahren umfasst dabei den Schritt des Aufbaus eines sicheren Kommunikationskanals mit einem mobilen Telekommunikationsgerät, wobei das mobile Telekommunikationsgerät zur Verwendung als elektronische Gesundheitskarte ausgebildet ist, wobei der erste Gesundheitskartenschlüssel dem mobilen Telekommunikationsgerät zugeordnet ist. Daraufhin erfolgt das Senden des mit dem ersten Gesundheitskartenschlüssel verschlüsselten Datenobjektschlüssels an das Telekommunikationsgerät und daraufhin das Empfangen des entschlüsselten Datenobjektschlüssels von dem Telekommunikationsgerät als Antwort auf das zuvor erfolgte Senden. Schließlich erfolgt in einem letzten Schritt das Entschlüsseln des medizinischen Datenobjekts mit dem entschlüsselten Datenobjektschlüssel.

Das erfindungsgemäße Verfahren zur Entschlüsselung eines medizinischen Datenobjekts durch ein Datenverarbeitungssystem, z. B. ein Apotheken-Informationssystem, hat den Vorteil, dass ein Patient nicht mehr eine elektronische Gesundheitskarte als separate Chipkarte mit sich führen muss. Es genügt hier die Verwendung eines handelsüblichen mobilen Telekommunikationsgerätes, wie z. B. eines Mobiltelefons, eines PDA (Personal Digital Assistant) mit eingebauter Funkschnittstelle usw., als elektronische Gesundheitskarte. Da ein Patient üblicherweise heutzutage ständig ein Mobiltelefon mit sich führt, wird dies die Akzeptanz der elektronischen Gesundheitskarte beträchtlich erhöhen. Außerdem ist die Wahrscheinlichkeit, dass in den meisten Situationen der Patient die elektronische Gesundheitskarte mit sich führt, beträchtlich erhöht: So ist z. B. im Falle eines Notfalles die Wahrscheinlichkeit wesentlich höher, dass in diesem Augenblick der Patient sein Mobiltelefon bei sich trägt, als dies bei der Verwendung einer elektronischen Gesundheitskarte als Chipkarte im Scheckkartenformat der Falle wäre.

Ferner ist durch die Verwendung der verfahrensgemäßen Schritte zur Entschlüsselung eines medizinischen Datenobjektes die notwendige Sicherheit gewährleistet, dass lediglich ein Besitzer der in dem mobilen Telekommunikationsgerät integrierten Gesundheitskarte in der Lage ist, auf die Rezeptdaten zuzugreifen. Somit wird ein unbefugtes Ausspähen der Rezeptdaten, während sich diese auf einem entsprechenden Rezeptserver befinden, zuverlässig verhindert.

Nach einer Ausführungsform der Erfindung umfasst das Verfahren ferner den Schritt einer Signaturüberprüfung, wobei eine Freigabe des medizinischen Datenobjekts nur dann erfolgt, wenn die Signatur für das medizinische Datenobjekt verifiziert wurde. Zum Beispiel kann die Signatur durch einen verschlüsselten Hash-Wert des medizinischen Datenobjekts ausgebildet sein, wobei der Hash-Wert mit einem ersten Gesundheitsdienstleisterschlüssel verschlüsselt ist, wobei die Signaturüberprüfung in diesem Fall die Schritte des Abrufens eines dem ersten Gesundheitsdienstleisterschlüssel zugeordneten zweiten Gesundheitsdienstleisterschlüssels umfasst, des Entschlüsselns der Signatur mit dem zweiten Gesundheitsdienstleisterschlüssel und der Berechnung eines Hash-Wertes des medizinischen Datenobjektes, wobei das medizinische Datenobjekt dann verifiziert ist, wenn der Hash-Wert des medizinischen Datenobjekts der entschlüsselten Signatur entspricht. Beispielsweise handelt es sich bei dem ersten und zweiten Gesundheitsdienstleisterschlüssel um den privaten und öffentlichen Schlüssel des Arztes, welcher mit dessen Heilberufsausweis verknüpft ist.

Nach einer Ausführungsform der Erfindung bilden also der erste Gesundheitsdienstleisterschlüssel und der zweite Gesundheitsdienstleisterschlüssel vorzugsweise ein asymmetrisches kryptografisches Schlüsselpaar.

Nach einer weiteren Ausführungsform der Erfindung wird der zweite Gesundheitsdienstleisterschlüssel von einer externen Datenbank abgerufen oder aus einer lokalen Datenbank ausgelesen. In anderen Worten bedeutet dies, dass vorzugsweise für eine vereinfachte Signaturüberprüfung auf eine entsprechende Datenbank zugegriffen wird, aus welcher aus einer Liste von Gesundheitsdienstleisterschlüsseln jener ausgelesen werden kann, welcher dem Arzt zugeordnet ist, welcher zuvor das elektronische Rezept signiert hat.

Nach einer weiteren Ausführungsform der Erfindung umfasst das Verfahren ferner den Schritt einer Authentifizierung des mobilen Telekommunikationsgeräts, wobei die Authentifikation mittels eines Challenge-Response-Verfahrens erfolgt.

Nach einer weiteren Ausführungsform der Erfindung umfasst das Verfahren ferner den Schritt des Anmeldens des mobilen Telekommunikationsgeräts an dem Datenverarbeitungssystem, wobei beim Anmelden des mobilen Telekommunikationsgeräts an dem Datenverarbeitungssystem eine Benutzerauthentifizierung gegenüber dem mobilen Telekommunikationsgerät erfolgt, wobei das Senden des mit dem ersten Gesundheitskartenschlüssel verschlüsselten Datenobjektschlüssels an das mobile Telekommunikationsgerät nur dann erfolgt, wenn die Benutzeridentifikation durch das mobile Telekommunikationsgerät verifiziert wurde. Damit ist gewährleistet, dass ein unbefugtes Benutzen der in dem mobilen Telekommunikationsgerät implementierten elektronischen Gesundheitskarte verhindert werden kann. Beispielsweise genügt es damit nicht, sich lediglich im Besitz des mobilen Telekommunikationsgerätes zu befinden, um das elektronische Rezept einzulösen. Vielmehr bedarf es ferner der Kenntnis einer speziellen Benutzer-Identifikation, welche zusätzlich entweder am mobilen Telekommunikationsgerät selber oder am Datenverarbeitungssystem eingegeben werden muss, um eine Freigabe des elektronischen Rezeptes zu bewirken. Im Falle dessen, dass die Benutzeridentifikation am Datenverarbeitungssystem eingegeben wird, wird zur Benutzerauthentifizierung die Benutzeridentifikation für das mobile Telekommunikationsgerät durch eine gesicherte Datenübertragung an das mobile Telekommunikationsgerät übertragen.

Nach einer Ausführungsform der Erfindung werden beim Anmeldens ferner durch das Datenverarbeitungssystem die Schritte des Empfangs der Benutzer-Identifikation, des Abrufens eines Anmeldeschlüssels und des Sendens der Benutzer-Identifikation an das mobile Telekommunikationsgerät ausgeführt, wobei die Benutzer-Identifikation mit dem Anmeldeschlüssel verschlüsselt ist. Beispielsweise handelt es sich bei dem Anmeldeschlüssel um den ersten Gesundheitskartenschlüssel, wobei beim Anmelden eine eindeutige Gesundheitskartenkennung vom mobilen Telekommunikationsgerät empfangen wird, wobei der erste Gesundheitskartenschlüssel der eindeutigen Gesundheitskartenkennung des mobilen Telekommunikationsgerätes zugeordnet ist. Der Schritt des Empfangens der eindeutigen Gesundheitskartenkennung ist daher notwendig, damit der erste Gesundheitskartenschlüssel von einer zentralen Datenbank anhand der Gesundheitskartenkennung ausgelesen werden kann. Alternativ gibt es auch die Möglichkeit, den ersten Gesundheitskartenschlüssel auf dem mobilen Telekommunikationsgerät selbst zu speichern, so dass eine Übertragung des ersten Gesundheitskartenschlüssels auf das Datenverarbeitungssystem im Klartext beim Anmelden des mobilen Telekommunikationsgeräts am Datenverarbeitungssystem erfolgen kann. In diesem Fall ist die zusätzliche Übertragung der eindeutigen Gesundheitskartenkennung an das Datenverarbeitungssystem nicht notwendig.

Die Verwendung des ersten Gesundheitskartenschlüssels als Anmeldeschlüssel hat den Vorteil, dass damit eine noch höhere Sicherheit der Authentizität der in dem mobilen Telekommunikationsgerät implementierten elektronischen Gesundheitskarte gewährleistet ist: Ausschließlich die elektronische Gesundheitskarte ist nämlich in der Lage, die mit dem ersten Gesundheitskartenschlüssel verschlüsselte Benutzer-Identifikation korrekt zu entschlüsseln, um auch hier z. B. in Verbindung mit einem Challenge-Response-Verfahren die erfolgreiche Entschlüsselung dem Datenverarbeitungssystem mitzuteilen.

Alternativ zur Verwendung des ersten Gesundheitskartenschlüssels zur Verschlüsselung der Benutzer-Identifikation ist es natürlich auch möglich, das mobile Telekommunikationsgerät anzuweisen, ein asymmetrisches kryptografisches Schlüsselpaar zu erzeugen und einen Schlüssel dieses Schlüsselpaares an das Datenverarbeitungssystem zu senden, woraufhin dieses die Benutzer-Identifikation mit diesem empfangenen Schlüssel verschlüsselt und an das mobile Telekommunikationsgerät zurückübermittelt. Auch in diesem Fall ist ausschließlich das mobile Telekommunikationsgerät dazu in der Lage, die Benutzer-Identifikation mittels des anderen Teils des asymmetrischen Schlüsselpaares zu entschlüsseln und damit die Einlösung des elektronischen Rezepts zu autorisieren. Allerdings ist hierbei zu berücksichtigen, dass dies weitere Systemressourcen des mobilen Telekommunikationsgeräts benötigt, da zuerst das asymmetrische Schlüsselpaar erzeugt werden muss.

Nach einer Ausführungsform der Erfindung handelt es sich bei der Benutzer Identifikation um ein biometrisches Merkmal, wie z. B. einen Fingerabdruck usw.

Nach einer Ausführungsform der Erfindung wird der sichere Kommunikationskanal vorzugsweise über eine Ende-zu-Ende-Verschlüsselung aufgebaut. Dabei erfolgt der Aufbau des sicheren Kommunikationskanals ausgehend von dem mobilen Telekommunikationsgerät über eine Kommunikationsverbindung, wobei die Kommunikationsverbindung auf einer Kontaktadresse des Datenverarbeitungssystems empfangen wird. Der Aufbau des sicheren Kommunikationskanals umfasst dabei ferner die Schritte des Empfangens einer Kontaktadresse des mobilen Telekommunikationsgeräts von dem mobilen Telekommunikationsgerät und dem Senden der Kontaktadresse des Datenverarbeitungssystems an die Kontaktadresse des mobilen Telekommunikationsgeräts als Antwort auf den Empfang der Kontaktadresse des mobilen Telekommunikationsgeräts.

Es sei hier angemerkt, dass vorzugsweise sämtliche Kommunikation zwischen dem Datenverarbeitungssystem und dem mobilen Telekommunikationsgerät drahtlos erfolgt, das heißt z. B. über Bluetooth, Infrarot oder aber auch unter Verwendung von GSM, GPRS, UMTS und weiteren Mobilfunkverbindungen.

So kann z. B. der initiierende Datenaustausch umfassend den Austausch entsprechender Kontaktadressen unter Verwendung einer Nahfeld-Kommunikation, wie z. B. Bluetooth usw. erfolgen, wohingegen der eigentliche Aufbau des sicheren Kommunikationskanals über eine mobile Telekommunikationsverbindung wie z. B. UMTS erfolgt.

Als Kontaktadresse wird hier im Falle des Datenverarbeitungssystems z.B. eine Telefonnummer des Datenverarbeitungssystems verstanden, über welche eine Verbindung mit dem Datenverarbeitungssystem hergestellt werden kann. Alternativ oder zusätzlich ist es auch möglich, dass die Kontaktadresse eine IP-Adresse des Datenverarbeitungssystems umfasst. Im Falle einer Nahfeldkommunikation kann die Kontaktadresse des Datenverarbeitungssystems auch als eine spezielle Kennung verstanden werden, über welche das Datenverarbeitungssystem beispielsweise über Bluetooth identifiziert werden kann.

Im Falle des mobilen Telekommunikationsgeräts wird unter Kontaktadresse ebenfalls beispielsweise eine Telefonnummer des mobilen Telekommunikationsgeräts verstanden. Im Falle einer Nahfeldkommunikation kann die Kontaktadresse des mobilen Telekommunikationsgeräts ebenfalls als eine spezielle Kennung verstanden werden, über welche das mobile Telekommunikationsgerät beispielsweise über Bluetooth identifiziert werden kann.

Nach einer Ausführungsform der Erfindung wird die Kommunikationsverbindung vom Datenverarbeitungssystem über einen zentralen Server empfangen. Dabei erfolgt die Kommunikation mit dem zentralen Server vorzugsweise über das Internet. Beispielsweise ist es hier realisierbar, dass ein Patient mit seinem mobilen Telekommunikationsgerät eine zentral vergebene Telefonnummer anruft, um damit mit dem besagten Server über eine mobile Telekommunikationsverbindung in Kontakt zu treten. In diesem Fall könnte z. B. insbesondere eine kostenlose zentrale Einwahlnummer bundesweit zur Verfügung gestellt werden, welche sich beim Patienten als universelle Einwahlnummer zum Einlösen von elektronischen Rezepten leicht einprägen lässt.

Sobald sich der Patient auf dem Server eingewählt hat, übermittelt er an den zentralen Server eine Vorgangskennung, wobei diese Vorgangskennung eindeutig dem Datenverarbeitungssystem zugeordnet ist. Durch die Zuordnung der Vorgangskennung zum Datenverarbeitungssystem ist nun der Server in der Lage, die vom Telekommunikationsgerät eingehende Verbindung an das entsprechende Apotheken-Informationssystem weiterzuleiten, das heißt zu routen. Damit ist auf unkomplizierte Art und Weise eine Kommunikationsverbindung zwischen dem Datenverarbeitungssystem und dem mobilen Telekommunikationsgerät hergestellt.

Nach einer Ausführungsform der Erfindung umfasst das Verfahren ferner den Schritt des Abrufens des verschlüsselten medizinischen Datenobjektes und der dem medizinischen Datenobjekt zugeordneten Signatur und der dem medizinischen Datenobjekt zugeordneten mit dem ersten Gesundheitskartenschlüssel verschlüsselten Datenobjektschlüssel von einer externen Rezeptdatenbank, wobei das Abrufen anhand der eindeutigen Gesundheitskartenkennung erfolgt.

In einem weiteren Aspekt betrifft die Erfindung ein Computerprogrammprodukt mit von einem Prozessor ausführbaren Instruktionen zur Durchführung der Verfahrensschritte des erfindungsgemäßen Verfahrens zur Entschlüsselung eines medizinischen Datenobjektes.

In einem weiteren Aspekt betrifft die Erfindung ein Datenverarbeitungssystem mit Mitteln zur Durchführung der Verfahrensschritte des erfindungsgemäßen Verfahrens zur Entschlüsselung eines medizinischen Datenobjektes. Dabei handelt es sich beispielsweise wie bereits oben angeführt, bei dem Datenverarbeitungssystem um ein Arzt-Informationssystem oder ein Krankenhaus-Informationssystem oder ein Apotheken-Informationssystem. Alternativ kann es sich bei dem Datenverarbeitungssystem auch um einen Konnektor handeln. Ein Konnektor ist dazu ausgebildet, um die Kommunikation zwischen elektronischer Gesundheitskarte, Arzt oder Apotheken-Informationssystem und Telematik-Infrastruktur, wie z.B. einem Rezeptserver herzustellen.

In einem weiteren Aspekt betrifft die Erfindung ein Verfahren zur Entschlüsselung eines verschlüsselten Datenobjektschlüssels, wobei die Entschlüsselung durch ein mobiles Kommunikationsgerät erfolgt.

In einem weiteren Aspekt betrifft die Erfindung ein Verfahren zur Entschlüsselung eines verschlüsselten Datenobjektschlüssels, wobei die Entschlüsselung durch ein mobiles Telekommunikationsgerät erfolgt, wobei das Telekommunikationsgerät zur Verwendung als elektronische Gesundheitskarte ausgebildet ist mit den Schritten des Aufbaus eines sicheren Kommunikationskanals mit einem Datenverarbeitungssystem eines Gesundheitsdienstleisters, dem Empfangen des verschlüsselten Datenobjektschlüssels von dem Datenverarbeitungssystem, dem Auslesen eines zweiten Gesundheitskartenschlüssels aus einem geschützten Speicher des Telekommunikationsgeräts, dem Entschlüsseln des Datenobjektschlüssels mittels des zweiten Gesundheitskartenschlüssels und dem Senden des entschlüsselten Datenobjektschlüssels an das Datenverarbeitungssystem.

In einem weiteren Aspekt betrifft die Erfindung ein Computerprogrammprodukt mit von einem Prozess ausführbaren Instruktionen zur Durchführung der Verfahrensschritte des erfindungsgemäßen Verfahrens zur Entschlüsselung eines verschlüsselten Datenobjektschlüssels.

In einem weiteren Aspekt betrifft die Erfindung ein mobiles Telekommunikationsgerät mit Mitteln zur Durchführung der Verfahrensschritte des erfindungsgemäßen Verfahrens zur Entschlüsselung eines verschlüsselten Datenobjektschlüssels.

In einem weiteren Aspekt betrifft die Erfindung ein Verfahren zur Entschlüsselung eines medizinischen Datenobjekts, wobei das medizinische Datenobjekt mit einem Datenobjektschlüssel verschlüsselt ist, wobei dem medizinischen Datenobjekt eine Signatur und eine mit einem ersten Gesundheitskartenschlüssel verschlüsselter Datenobjektschlüssel zugeordnet ist, wobei das medizinische Datenobjekt dem ersten Gesundheitskartenschlüssel zugeordnet ist. Wie bereits oben erwähnt, kann die Signatur zusammen mit dem medizinischen Datenobjekt verschlüsselt sein oder die Signatur kann als separate Datei neben dem verschlüsselten medizinischen Datenobjekt und dem verschlüsselten Datenobjektschlüssel vorliegen.

Das erfindungsgemäße Verfahren beinhaltet die Schritte des Aufbaus eines sicheren Kommunikationskanals zwischen einem Datenverarbeitungssystem eines Gesundheitsdienstleisters und dem mobilen Telekommunikationsgerät, wobei das Telekommunikationsgerät zur Verwendung als elektronische Gesundheitskarte ausgebildet ist, wobei der erste Gesundheitskartenschlüssel dem mobilen Telekommunikationsgerät zugeordnet ist. Der weitere Schritt des Verfahrens umfasst das Senden des mit dem ersten Gesundheitskartenschlüssel verschlüsselten Datenobjektschlüssels durch das Datenverarbeitungssystem an das Telekommunikationsgerät und den Schritt der Entschlüsselung des verschlüsselten Datenobjektschlüssels durch das mobile Telekommunikationsgerät, wobei die Entschlüsselung mittels eines zweiten Gesundheitskartenschlüssels erfolgt, wobei der erste und der zweite Gesundheitskartenschlüssel ein asymmetrisches kryptografisches Schlüsselpaar bilden. Schließlich erfolgt das Senden des entschlüsselten Datenobjektschlüssels von dem Telekommunikationsgerät an das Datenverarbeitungssystem gefolgt vom Entschlüsseln des medizinischen Datenobjekts mit dem entschlüsselten Datenobjektschlüssel durch das Datenverarbeitungssystem.

Im Folgenden werden Ausführungsformen der Erfindung anhand der Zeichnungen näher erläutert. Es zeigen:
- Fig. 1: ein Blockdiagramm eines Datenverarbeitungssystems zur Abfrage von Rezeptdaten unter Verwendung einer in einem mobilen Telekommunikationsgerät integrierten elektronischen Patientenkarte;
- Fig. 2: ein Flussdiagramm eines Verfahrens zur Entschlüsselung von Rezeptdaten,
- Fig. 3: ein Flussdiagramm eines Verfahrens zum Aufbau eines Kommunikationskanals zwischen einem Datenverarbeitungssystem und einem mobilen Telekommunikationsgerät,
- Fig. 4: ein Flussdiagramm eines Verfahrens zur Benutzer-Authentifizierung zur Entschlüsselung von Rezeptdaten.

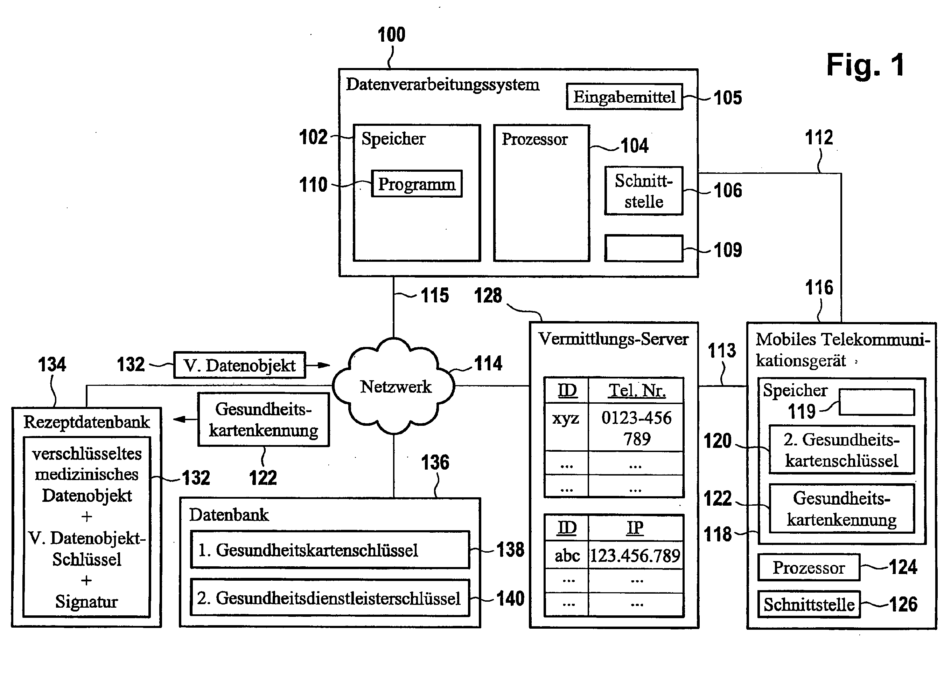

Die Fig. 1 zeigt ein Blockdiagramm eines Datenverarbeitungssystems 100 zur Abfrage von Rezeptdaten unter Verwendung einer in einem mobilen Telekommunikationsgerät 116 integrierten elektronischen Patientenkarte.

Das Datenverarbeitungssystem umfasst einen Speicher 102 und einen Prozessor 104. In dem Speicher ist unter anderem ein Computerprogramm 110 enthalten, welches Instruktionen enthält, welche vom Prozessor 104 ausführbar sind, um das erfindungsgemäße Verfahren zur Entschlüsselung von medizinischen Datenobjekten vorzunehmen. Ferner dient das Programm 110 zur Steuerung sämtlicher Datenaustauschvorgänge, die das erfindungsgemäße Verfahren mit sich bringt. Ferner weist das Datenverarbeitungssystem 100 Eingabemittel 105 und eine Schnittstelle 106 auf. Bei den Eingabemitteln 105 kann es z. B. um eine Tastatur oder eine Maus handeln, jedoch ist auch die Verwendung eines Fingerabdruck- oder Iris-Scanners oder ähnliches möglich. Des weiteren weist das Datenverarbeitungssystem Ausgabemittel 109 auf, wie z. B. einen Drucker, ein Anzeigegerät wie einen Bildschirm, usw.

Das mobile Telekommunikationsgerät 116, welches zur Verwendung als elektronische Gesundheitskarte ausgebildet ist, weist ebenfalls einen Prozessor 124 und einen Speicher 118 auf. Im Speicher 118 ist unter anderem ein Computerprogrammprodukt 119 enthalten mit Instruktionen, welche vom Prozessor 124 ausführbar sind, um sämtliche Datenaustauschoperationen des Verfahrens zum Entschlüsseln von Datenobjektschlüsseln, als auch den Entschlüsselungsvorgang selbst vorzunehmen.

Im Folgenden sei nun beispielhaft die Interaktion des Datenverarbeitungssystems 100 und des mobilen Telekommunikationsgeräts 116 gezeigt, wenn mit dem mobilen Telekommunikationsgerät 116 ein elektronisches Rezept eingelöst werden soll. In diesem Fall handelt es sich bei dem Datenverarbeitungssystem 100 um ein Apotheken-Informationssystem und bei dem mobilen Telekommunikationsgerät 116 um ein Mobiltelefon eines Patienten.

Die folgende Ausführungsform soll hierbei lediglich als eine Möglichkeit von vielen verstanden werden, wie die Kommunikation zwischen Mobiltelefon 116 und Apotheken-Informationssystem 100 realisiert werden kann. Beispielsweise geht nun ein Patient mit seinem Mobiltelefon 116 in eine Apotheke, um ein elektronisches Rezept einzulösen. Dazu wählt der Patient mit seinem Mobiltelefon die Telefonnummer eines Vermittlungsservers 128 an. Die Kommunikation zwischen dem Mobiltelefon 116 und dem Vermittlungsserver 128 läuft dabei über eine mobile Telekommunikationsverbindung 113, wie z. B. GPRS-Verbindung. Nach dem Zustandekommen der Verbindung zwischen dem Vermittlungsserver 128 und dem mobilen Telekommunikationsgerät 116 wird der Patient dazu aufgefordert, eine eindeutige Vorgangskennung an den Vermittlungsserver 128 zu übermitteln. Bei dieser Vorgangskennung kann es sich z. B. um eine Nummer der Apotheke, den Apotheken-Namen oder eine andere eindeutige Kennzeichnung der Apotheke handeln, gefolgt von einer speziell für diesen Vorgang von der Apotheke vergebene Vorgangsnummer.

In der vorliegenden Ausführungsform der Fig. 1 ist z. B. in einer Datenbanktabelle des Vermittlungsservers 128 der Apotheke ABC eine IP-Adresse 123.456.789 zugeordnet. Daraufhin stellt der Vermittlungsserver 128 mit dem Datenverarbeitungssystem 100 über das Netzwerk 114 eine Internetverbindung 115 her und teilt gleichzeitig dem Datenverarbeitungssystem 100 die eindeutige Vorgangskennung mit, welche nun auch die laufende individuell vergebene Vorgangsnummer beinhaltet, welche zuvor dem Patienten mitgeteilt wurde. Zum Beispiel könnte die Apotheke mit dem Namen ABC dem Patienten zuvor mitgeteilt haben: "Für die Einlösung des Rezepts erhalten Sie die Vorgangsnummer 123". Daraufhin hat der Patient mit seinem mobilen Telekommunikationsgerät dem Vermittlungsserver 128 mitgeteilt, "Apotheke ABC, Vorgangsnummer 123". Auf diese Art kann nun zwischen dem Datenverarbeitungssystem 100 und dem mobilen Telekommunikationsgerät 116 unter Verwendung des zentralen Vermittlungsservers 128 eine Telekommunikationsverbindung hergestellt werden. Wichtig ist hierbei, dass diese Verbindung zwischen dem Datenverarbeitungssystem 100 und dem mobilen Telekommunikationsgerät 116 eine nichtabhörbare gesicherte und damit verschlüsselte Verbindung ist. Im Falle einer Mobilfunkverbindung zwischen dem Vermittlungsserver 128 und dem mobilen Telekommunikationsgerät 116 liegt eine starke Verschlüsselung üblicherweise gemäß dem Stand der Technik bereits vor, z.B. im Falle von GSM und UMTS. Dies gilt jedoch nicht für die Verschlüsselung der Datenübermittlung zwischen dem Vermittlungsserver 128 und dem Datenverarbeitungssystem 100 über das Netzwerk 114, wie z. B. das Internet. Hier sollte dafür gesorgt werden, dass über entsprechende Verschlüsselungstechniken ein Abhören der Kommunikation zuverlässig verhindert wird.

Es sei darauf hingewiesen, dass vorzugsweise die Kommunikation zwischen dem Datenverarbeitungssystem 100 und dem mobilen Telekommunikationsgerät 116 statt unter Verwendung des Vermittlungsservers 128 auch direkt über eine direkte drahtlose Nahfeldverbindung 112, wie z. B. eine Bluetooth- oder Infrarot-Verbindung realisiert werden kann. Auch in diesem Fall muss gewährleistet werden, dass eine abhörsichere Verbindung gestellt wird.

Nach Herstellung der Kommunikationsverbindung entweder direkt oder indirekt über den Vermittlungsserver 128 erfolgt eine Übermittlung der Gesundheitskartenkennung 122, welche im Speicher 118 des mobilen Telekommunikationsgeräts 116 gespeichert ist, an das Datenverarbeitungssystem 100. Unter Verwendung dieser Gesundheitskartenkennung 122 frägt das Datenverarbeitungssystem 100 bei einer externen Rezeptdatenbank 134 nach, ob für diese Gesundheitskartenkennung 122 elektronische Rezepte bereitgestellt sind. Im vorliegenden Fall der Fig. 1 befindet sich in der Rezeptdatenbank 134 zugehörig zu der Gesundheitskartenkennung 122 ein verschlüsseltes medizinisches Datenobjekt 132, welchem ein entsprechender Datenobjektschlüssel und eine Signatur eines behandelnden Arztes zugeordnet sind. Wünscht nun der Patient die Einlösung von genau diesem Rezept, so werden das verschlüsselte medizinische Datenobjekt 132, der zugehörige Datenobjektschlüssel und die Signatur über das Netzwerk 114 an das Datenverarbeitungssystem 100 übermittelt.

Das medizinische Datenobjekt ist im vorliegenden Fall mit einem Datenobjektschlüssel verschlüsselt, wobei es sich hierbei um einen symmetrischen Schlüssel handelt. Der Datenobjektschlüssel selbst liegt in verschlüsselter Form vor, wobei er mit einem ersten Gesundheitskartenschlüssel 138 verschlüsselt ist. Dieser erste Gesundheitskartenschlüssel 138 ist ein öffentlicher Schlüssel, weicher z. B. in einer zentralen externen Datenbank eines Trust-Centers 136 vorliegt und abrufbar ist. Zur Verschlüsselung eines medizinischen Datenobjektes muss somit in einer Arztpraxis lediglich ein zufälliger symmetrischer Schlüssel erzeugt werden, wobei dieser Schlüssel dann verwendet wird, um das medizinische Datenobjekt zu verschlüsseln. Der zufällig erzeugte symmetrische Schlüssel selbst wird mit dem ersten Gesundheitskartenschlüssel 138 verschlüsselt. Bei dem ersten Gesundheitskartenschlüssei 138 handelt es sich um einen Teil eines asymmetrischen Schlüsselpaares, wobei der andere Teil des asymmetrischen Schlüsselpaares der zweite Gesundheitskartenschlüssel 120 ist, welcher nichtauslesbar im Speicher 118 des mobilen Telekommunikationsgeräts 116 abgelegt ist.

Um also eine Entschlüsselung des verschlüsselten medizinischen Datenobjektes vorzunehmen, muss nun zuerst der verschlüsselte Datenobjektschlüssel durch das mobile Telekommunikationsgerät 116 entschlüsselt werden. Dazu wird nun vom Datenverarbeitungssystem 100, wie bereits oben erwähnt, das verschlüsselte medizinische Datenobjekt 132, der verschlüsselte Datenobjektschlüssel und die Signatur von der Rezeptdatenbank134 ausgelesen und in das Datenverarbeitungssystem 100 geladen. Das Datenverarbeitungssystem 100 versendet über den aufgebauten gesicherten Kommunikationskanal den verschlüsselten Datenobjektschlüssel an das mobile Telekommunikationsgerät 116, welches in der Lage ist, unter Verwendung des zweiten Gesundheitskartenschlüssels 120 den verschlüsselten Datenobjektschlüssel zu entschlüsseln. Daraufhin wird der entschlüsselte Datenobjektschlüssel ebenfalls über die Kommunikationsverbindung zurück an das Datenverarbeitungssystem 100 übermittelt, welches nun in der Lage ist, das verschlüsselte medizinische Datenobjekt zu entschlüsseln.

Gleichzeitig solle hier das Datenverarbeitungssystem 100 auch noch eine Signaturüberprüfung vornehmen. Typischerweise handelt es sich bei der Signatur des medizinischen Datenobjekts um einen Hash-Wert des medizinischen Datenobjekts, welcher mit einem nichtöffentlichen ersten Gesundheitsdienstleisterschlüssel, das heißt dem privaten Schlüssel eines Arztes, verschlüsselt wurde. Um die Signatur zu überprüfen, wird von dem medizinischen Datenobjekt wiederum ein Hash-Wert gebildet, welcher daraufhin mit dem Hash-Wert verglichen wird, welcher durch Entschlüsselung der Signatur mit dem zweiten Gesundheitsdienstleisterschlüssel 113 erhalten wird. Der zweite Gesundheitsdienstleisterschlüssel 114 ist wiederum beim Trust-Center 136 in dessen Datenbank abgelegt.

Es sei hier nochmals darauf hingewiesen, dass die Signatur entweder vom medizinischen Datenobjekt oder vom verschlüsselten medizinischen Datenobjekt gebildet werden kann. Dementsprechend muss auch die Signaturüberprüfung angepasst werden.

Nach Verifizierung der Signatur und erfolgreicher Entschlüsselung des medizinischen Datenobjektes ist nun ein Patient in der Lage, das elektronische Rezept einzulösen.

Alle Kommunikationen des Datenverarbeitungssystems 100 verlaufen über die Schnittstelle 106. Alle Kommunikationen des mobilen Telekommunikationsgeräts 116 erfolgen über die Schnittstelle 126.

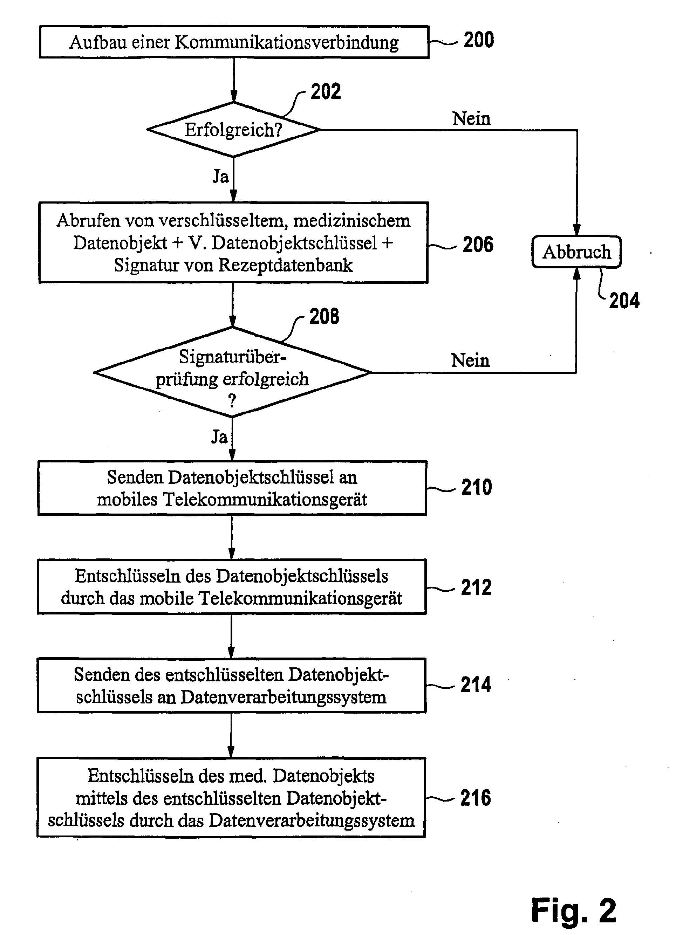

In der Fig. 2 ist nun eine grobe Übersicht des Verfahrens zur Entschlüsselung der Rezeptdaten gezeigt. In Schritt 200 erfolgt der Aufbau einer Kommunikationsverbindung zwischen dem mobilen Telekommunikationsgerät und dem Datenverarbeitungssystem. Ist dieser Aufbau der Kommunikationsverbindung in Schritt 202 nicht erfolgreich, so erfolgt in Schritt 204 ein Abbruch des Entschlüsselungsverfahrens. Ist hingegen in Schritt 202 der Aufbau der Kommunikationsverbindung erfolgreich, so erfolgt daraufhin in Schritt 206 das Abrufen des verschlüsselten medizinischen Datenobjektes, des verschlüsselten Datenobjektschlüssels und der Signatur aus einer externen Rezept-Datenbank. Vorzugsweise erfolgt daraufhin im anschließenden Schritt 208 eine Signaturüberprüfung, welche ebenfalls im Falle einer nichterfolgreichen Verifizierung zum Abbruch des Entschlüsselungsverfahrens in Schritt 204 führt.

Ist hingegen in Schritt 208 die Signaturüberprüfung erfolgreich, erfolgt in Schritt 210 das Senden des verschlüsselten Datenobjektschlüssels an das mobile Telekommunikationsgerät. Daraufhin entschlüsselt in Schritt 212 das mobile Telekommunikationsgerät den Datenobjektschlüssel unter Verwendung des privaten Gesundheitskartenschlüssels und übermittelt in Schritt 214 den entschlüsselten Datenobjektschlüssel zurück an das Datenverarbeitungssystem. In Schritt 216 erfolgt schließlich das Entschlüssein des medizinischen Datenobjektes mittels des entschlüsselten Datenobjektschlüssels durch das Datenverarbeitungssystem selbst.

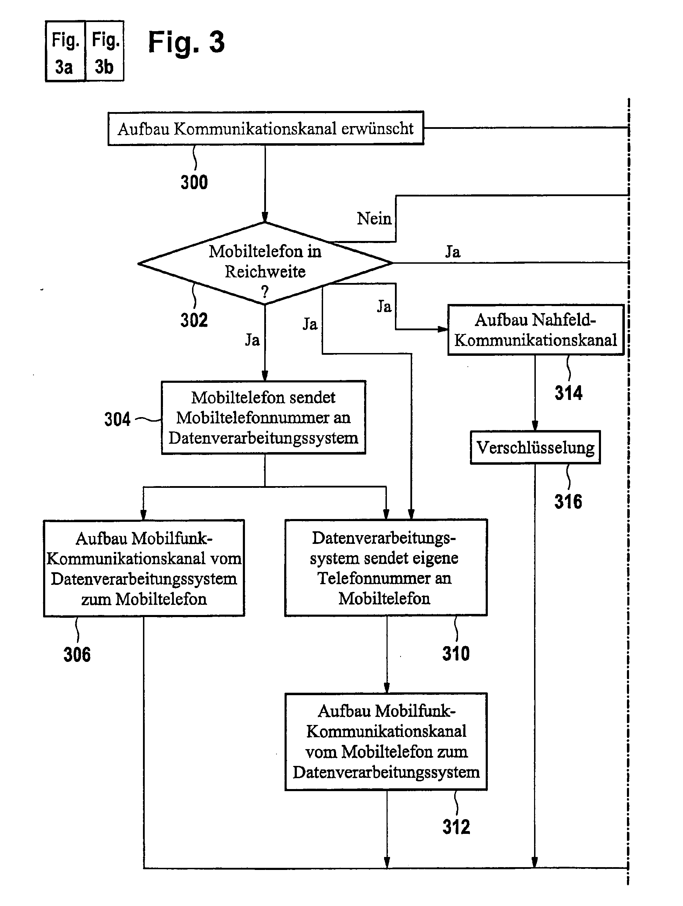

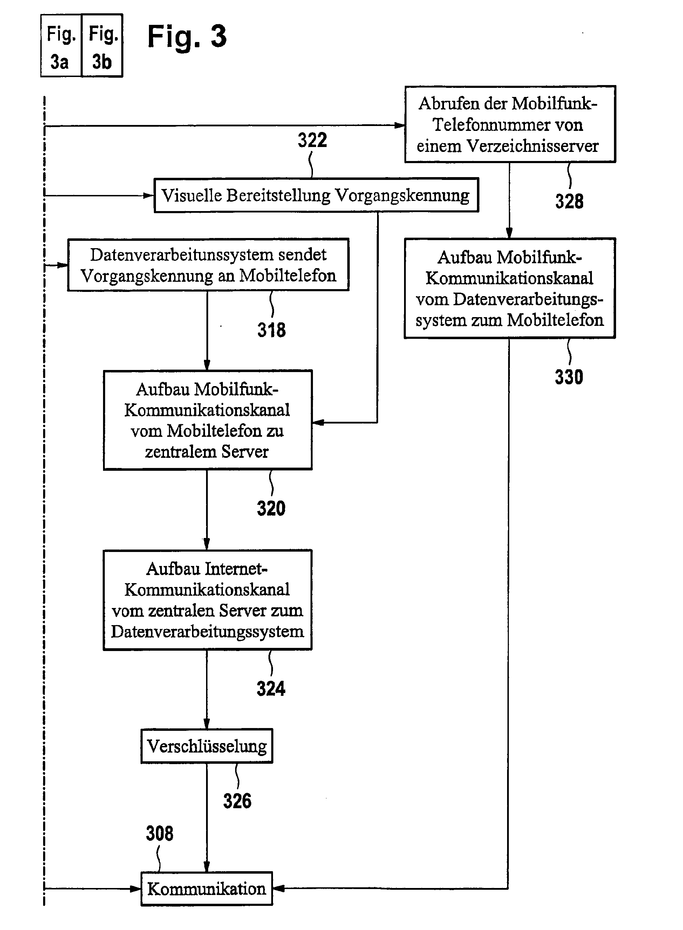

Der detaillierte Vorgang des Aufbaus der Kommunikationsverbindung, wie in Schritt 200 angedeutet, ist im Detail in Fig. 3 beschrieben.

Fig. 3 zeigt ein Flussdiagramm eines Verfahrens zum Aufbau eines Kommunikationskanals zwischen einem Datenverarbeitungssystem eines Gesundheitsdienstleisters und einem mobilen Telekommunikationsgerät eines Patienten, wobei das mobile Telekommunikationsgerät zur Verwendung als elektronische Gesundheitskarte ausgebildet ist. Ist nun, wie in Fig. 3 gezeigt, ein Aufbau eines Kommunikationskanals in Schritt 300 gewünscht, existieren verschiedenste Möglichkeiten, wie ein solcher Kommunikationskanalaufbau realisiert werden kann. Beispielsweise wird in Schritt 302 überprüft, ob das Mobiltelefon in Reichweite ist, so dass zwischen dem Datenverarbeitungssystem und dem mobilen Kommunikationsgerät eine Nahfeldverbindung, z. B. unter Verwendung von Bluetooth hergestellt werden kann.

Ist das Mobiltelefon in Schritt 302 in Reichweite, so bestehen mehrere Möglichkeiten, wie fortgefahren werden kann. Beispielsweise kann das Mobiltelefon in Schritt 304 seine eigene Mobiltelefonnummer unter Verwendung der Nahfeldverbindung an das Datenverarbeitungssystem übermitteln, so dass daraufhin in Schritt 306 ein Mobilfunk-Kommunikationskanal vom Datenverarbeitungssystem zum Mobiltelefon auf dessen Mobiltelefonnummer hergestellt werden kann. Daraufhin erfolgt in Schritt 308 die Kommunikation zwischen dem mobilen Telekommunikationsgerät und dem Datenverarbeitungssystem. Alternativ ist es jedoch auch möglich, nach Schritt 304 über die Nahfeldverbindung vom Datenverarbeitungssystem ausgehend die eigene Telefonnummer des Datenverarbeitungssystems an die zuvor übermittelte Mobiltelefonnummer zu senden. Dies ist in Schritt 310 angedeutet. Daraufhin erfolgt in Schritt 312 der Aufbau eines Mobilfunk-Kommunikationskanals vom Mobiltelefon zum Datenverarbeitungssystem, wobei das Mobiltelefon die vom Datenverarbeitungssystem angegebene Telefonnummer anwählt. Der Aufbau des Mobilfunk-Kommunikationskanals vom Mobiltelefon zum Datenverarbeitungssystem ist in Schritt 312 dargestellt, woraufhin nach Schritt 312 wiederum die Kommunikation mit Schritt 308 erfolgt.

Alternativ zur Verwendung der Schritte 304, 306, 310 und 312 genügt es auch, wenn in Schritt 302 detektiert wurde, dass das Mobiltelefon in Reichweite ist, dass beispielsweise direkt nach Schritt 302 der Schritt 310 ausgeführt wird, in welchem das Datenverarbeitungssystem seine eigene Telefonnummer an das Mobiltelefon übermittelt. Diese Übermittlung kann in diesem Fall auch rein unter Verwendung der Nahfeldverbindung erfolgen. Daraufhin ruft das Mobiltelefon die angegebene Telefonnummer an, so dass die Kommunikation zwischen dem Datenverarbeitungssystem und dem Mobiltelefon in Schritt 308 erfolgen kann.

Eine weitere Alternative besteht darin, die gesamte Kommunikation zwischen Mobiltelefon und Datenverarbeitungssystem ausschließlich über den Nahfeld-Kommunikationskanal zu bewerkstelligen. Dies ist z. B. unter Verwendung der Schritte 314 und 316 dargestellt. Ist z.B. das Mobiltelefon in Schritt 302 in Reichweite, so dass eine Nahfeld-Kommunikationsverbindung hergestellt werden kann, erfolgt in Schritt 314 der Aufbau eines Nahfeld-Kommunikationskanals zwischen dem Datenverarbeitungssystem und dem Mobiltelefon. Hier ist es jedoch erforderlich, zusätzlich eine Verschlüsselung in Schritt 316 vorzunehmen, da eine Nahfeld-Kommunikation üblicherweise in unverschlüsselter Form erfolgt. Nach Schritt 316 erfolgt die Kommunikation in Schritt 308 zwischen dem Datenverarbeitungssystem und dem mobilen Telekommunikationsgerät.

Es sei hier noch auf zwei weitere Aspekte eingegangen. Zum einen betrifft dies die Verschlüsselung bei Verwendung des Mobilfunk-Kommunikationskanals zwischen dem Datenverarbeitungssystem und dem Mobiltelefon: Wird ein Mobilfunk-Kommunikationskanal zur Kommunikation verwendet, ist eine weitere Datenverschlüsselung nicht zwingend notwendig. Heutzutage sind Mobilfunk-Kommunikationsverbindungen bereits hoch verschlüsselt, so dass damit die Implementierung weiterer Verschlüsselungsalgorithmen im Mobiltelefon nicht notwendig ist, was zur Reduktion eines Systemressourcen-Verbrauchs im Mobiltelefon beiträgt.

Zum anderen betrifft dies die Verwendung der Nahfeld-Kommunikation zur Übermittlung der Telefonnummern zwischen dem Datenverarbeitungssystem und dem Mobiltelefon. Wird eine Telefonnummer des Datenverarbeitungssystems und eventuell sogar eine Vorgangsnummer zur Kommunikation in Schritt 310 von dem Datenverarbeitungssystem an die Telefonnummer des Mobiltelefons übermittelt, z. B. unter Verwendung einer Kurznachricht SMS, so ist dadurch gewährleistet, dass in eindeutiger Weise ausschließlich der Besitzer dieses Mobiltelefons diese Nachricht erhält. Eine Telefonnummer eines Mobiltelefons ist bereits so weit personalisiert, dass damit ein Ausspähen von Vorgangskennungen durch Dritte unmöglich gemacht wird. Auch sind hier zur Initialisierung der Kommunikation keine weiteren Verschlüsselungsmechanismen notwendig, da, wie bereits oben angemerkt, alle Mobilfunk-Kommunikationen bereits mit hoher Verschlüsselung standardmäßig durchgeführt werden.

Es sei an dieser Stelle darauf hingewiesen, dass in der Figur 3 nicht das Senden einer Kommunikationsanfrage durch das Mobiltelefon an das Datenverarbeitungsssytem explizit ausgeführt ist. Diese Kommunikationsanfrage kann aber beispielsweise in Schritt 302 gesehen werden.

Eine weitere Alternative zum Aufbau des Kommunikationskanals im Falle dessen, dass sich das Mobiltelefon in Schritt 302 in Reichweite befindet, besteht darin, z. B. dem Mobiltelefon unter Verwendung der Nahfeld-Kommunikation eine Vorgangskennung zu übermitteln. Dies ist in Schritt 318 mit der Übermittlung der Vorgangskennung durch das Datenverarbeitungssystem an das Mobiltelefon angedeutet. Daraufhin baut in Schritt 320 das Mobiltelefon einen Mobilfunk-Kommunikationskanal zu einem zentralen Server auf, z. B. unter Verwendung einer zentralen Einwahlnummer. Aufgrund der übermittelten Vorgangskennung, welche vom Mobiltelefon zum zentralen Server beim Aufbau des Kommunikationskanals zusätzlich übermittelt wird, ist nun in Schritt 324 der Server in der Lage, einen Internet-Kommunikationskanal vom zentralen Server zum entsprechenden durch die Vorgangskennung bestimmten Datenverarbeitungssystem herzustellen, das heißt dem Apotheken-Informationssystem. Nachdem dies in Schritt 324 erfolgt ist, ist jedoch in Schritt 326 aufgrund der Verwendung des Internets eine weitere Verschlüsselung des Datenaustausches notwendig. In diesem Fall erfolgt der Datenaustausch, wie bereits in der Fig. 1 im Detail beschrieben, nämlich zwischen Mobiltelefon, Server und Datenverarbeitungssystem. Dies entspricht der Kommunikation wie in Schritt 308 dargestellt.

Die Schritte 320, 324, 326 und darauf folgend 308 können jedoch auch durchgeführt werden, wenn sich das Mobiltelefon nicht in Nahfeld-Reichweite befindet. Wird nämlich in Schritt 302 festgestellt, dass sich das Mobiltelefon außerhalb der Reichweite befindet, um eine Nahfeld-Kommunikation durchzuführen, bzw. im Falle dessen, dass das Mobiltelefon für eine Nahfeld-Kommunikation nicht ausgestattet ist, bietet es sich auch an, am Datenverarbeitungssystem selbst die Vorgangskennung visuell bereitzustellen. Dies ist mit Schritt 322 skizziert. In diesem Fall gibt der Patient von Hand die dargestellte Vorgangskennung beim Aufbau des Mobilfunk-Kommunikationskanals zum zentralen Server ein, so dass daraufhin schließlich die Schritte 320, 324, 326 und 308 durchgeführt werden können.

Es ist jedoch auch möglich, dass im Falle dessen sich das Mobiltelefon außerhalb der Reichweite befindet, um eine Nahfeld-Kommunikation durchzuführen, das Mobiltelefon eine räumliche Positionsbestimmung vornimmt bzw. vornehmen lässt. Ist das Mobiltelefon mit einem GPS-Empfänger ausgestattet, so kann das Mobiltelefon die zuletzt aufgezeichneten Positions-Koordinaten als Vorgangskennung an den zentralen Server schicken, welcher anhand einer ihm vorliegenden Tabelle die zu diesen Koordinaten zugehörige Apotheke und damit das entsprechende Datenverarbeitungssystem der Apotheke zuordnen kann. Daraufhin kann der Server eine sichere Kommunikationsverbindung zwischen dem Mobiltelefon und dem Datenverarbeitungssystem, zu welchem diese Koordinaten zugehörig sind, herstellen.

Ist das Mobiltelefon nicht mit einem GPS-Empfänger ausgestattet, lässt sich eine solche Positionsbestimmung auch anhand der aktuellen Mobilfunkzelle vornehmen, in welcher sich das Mobiltelefon augenblicklich befindet. Es handelt sich hierbei also um eine Mobilfunknetz-Basierte Positionsbestimmung. In diesem Fall verfügt der Server über eine Tabelle, in welcher jeder Mobilfunkzelle eine dort befindliche Apotheke und deren Datenverarbeitungssystemadresse (z.B. IP-Adresse) zugeordnet ist. Auch in diesem Fall kann daraufhin der Server eine sichere Kommunikationsverbindung zwischen dem Mobiltelefon und dem Datenverarbeitungssystem, zu welchem die Mobilfunkzellen-Koordinaten zugehörig sind, herstellen.

Eine weitere Alternative, um einen Kommunikationskanal aufzubauen, besteht darin, dass der in Fig. 1 skizzierte Verzeichnisserver dazu verwendet wird, um eine Kommunikationsverbindung vom Datenverarbeitungssystem ausgehend zum Mobiltelefon herzustellen. In diesem Fall gibt z. B. ein Apotheker die Gesundheitskartenkennung des Patienten in sein System ein um übermittelt diese Gesundheitskartenkennung an den Vermittlungsserver. Der Vermittlungsserver liest aus seiner Datenbank die zu der Gesundheitskartenkennung gespeicherte Mobiltelefonnummer aus und übermittelt diese zurück an das Datenverarbeitungssystem. In diesem Fall erfolgt nach Abrufen der Mobiltelefonnummer von einem Verzeichnisserver in Schritt 328, wie in der Fig. 3 dargestellt, der Schritt 330 mit dem Aufbau eines Mobilfunk-Kommunikationskanals vom Datenverarbeitungssystem zum Mobiltelefon, gefolgt von einer anschließenden Kommunikation zwischen dem Datenverarbeitungssystem und dem Mobiltelefon in Schritt 308. Alternativ ist es auch möglich, dass der Verzeichnisserver unter Verwendung der gespeicherten Mobiltelefonnummer direkt eine Telekommunikationsverbindung zum Mobiltelefon herstellt, so dass hier eine Kommunikation Datenverarbeitungssystem-Verzeichnisserver-Mobiltelefon stattfindet.

In einer weiteren in Fig. 3 nicht illustrierten Alternative ist es auch möglich, dass eine direkte Kommunikationsverbindung ausgehend Mobiltelefon zum Datenverarbeitungssystem hergestellt wird, indem ein Patient direkt die Telefonnummer des Datenverarbeitungssystems von Hand anwählt. Das Selbe gilt auch in entgegengesetzter Richtung, dass ein Apotheker die direkte Kommunikationsverbindung zum Mobiltelefon des Patienten herstellt, indem er am Datenverarbeitungssystem die Nummer des Patienten-Mobiltelefons von Hand eingibt und anwählt.

Wie bereits oben erwähnt, ist für alle Kommunikationen notwendig, dass ein Ausspähen von Daten zuverlässig verhindert wird. Dies erfordert jedoch auch eine zuverlässige Benutzer-Authentifizierung, so dass ein Missbrauch von Rezeptdaten bzw. ein Missbrauch der in dem Mobiltelefon integrierten elektronischen Gesundheitskarte verhindert wird.

Vorzugsweise erfolgt die Initiierung der Kommunikation zwischen Mobiltelefon und Datenverarbeitungssystem durch das Mobiltelefon, indem z.B. in Schritt 302 eine Kommunikationsanfrage an das Datenverarbeitungssystem übermittelt wird. Daraufhin können alle weiteren Folgeschritte zum Aufbau des Kommunikationskanals vollautomatisch durch das Mobiltelefon und das Datenverarbeitungssystem erfolgen.

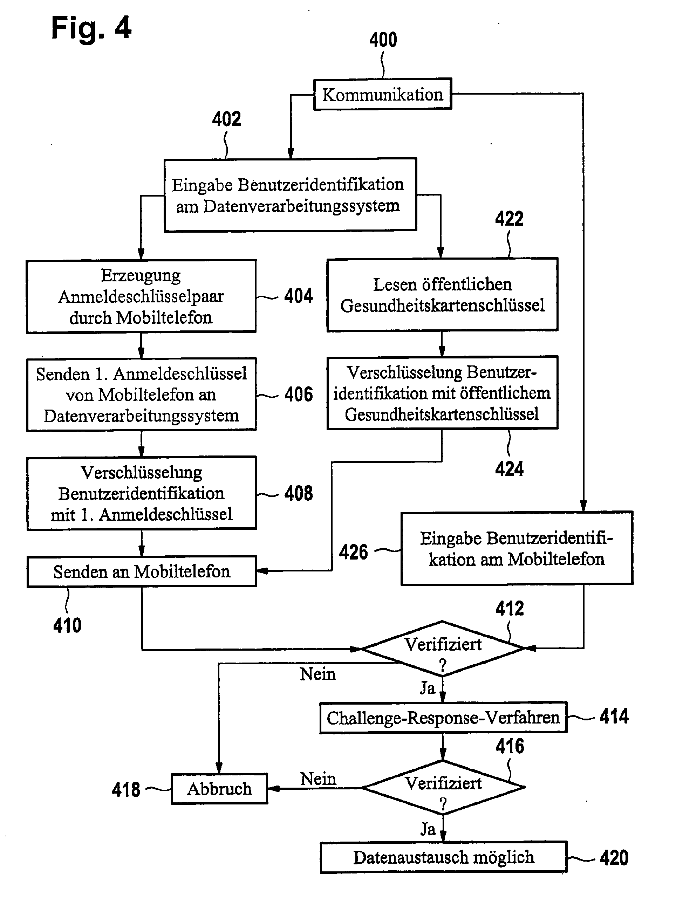

Hierzu illustriert die Fig. 4 ein Flussdiagramm eines Verfahrens zur Benutzer-Authentifizierung zur Entschlüsselung von Rezeptdaten. Der Schritt 300, dem Aufbau der Kommunikation, entspricht dabei dem in der Fig. 3 zuvor diskutierten Verfahren.

Nachdem also in Schritt 400 eine Kommunikation zwischen dem Mobiltelefon und dem Datenverarbeitungssystem hergestellt wurde, kann sich nun ein Patient insofern authentifizieren, indem er in Schritt 426 eine entsprechende Identifikation, z. B. eine PIN in sein Mobiltelefon eingibt, um damit die Verwendung der elektronischen Gesundheitskarte zu autorisieren. Dem Schritt 426 folgt der Schritt 412, in welchem überprüft wird, ob die Benutzer-Identifikation durch das Mobiltelefon verifiziert wurde. Ist dies nicht der Fall, erfolgt nach Schritt 412 der Schritt 418, dem Abbruch des Autorisationsverfahrens.

Wurde jedoch in Schritt 412 der Benutzer gegenüber dem Mobiltelefon authentifiziert, erfolgt in Schritt 414 ein optionales Challenge-Response-Verfahren. Hierbei kommt es darauf an zu verifizieren, ob die in dem Mobiltelefon enthaltene elektronische Gesundheitskarte auch tatsächlich zum Einlösen eines beim Apotheken-Informationssystem vorliegenden elektronischen Rezeptes berechtigt ist. Ein Beispiel dessen, wie dieses Challenge-Response-Verfahren durchgeführt werden könnte, ist beispielsweise dadurch gegeben, dass das Apotheken-Informationssystem (Datenverarbeitungssystem) eine zufällige Zahl erzeugt und diese mit dem öffentlichen Gesundheitskartenschlüssel (Fig. 1: erster Gesundheitskartenschlüssel 138) verschlüsselt. Die verschlüsselte Zufallszahl wird daraufhin an das Mobiltelefon übermittelt, woraufhin das Mobiltelefon unter Verwendung seines ausschließlich ihm bekannten privaten Gesundheitskartenschlüssels diese Zufallszahl wieder entschlüsselt. Daraufhin übermittelt das Mobiltelefon die entschlüsselte Zufallszahl in Klartext zurück an das Datenverarbeitungssystem. Stimmt die zurückübermittelte Zufallszahl mit der zuvor vom Datenverarbeitungssystem erzeugten Zufallszahl überein, ist gewährleistet, dass eine Kommunikation mit einem berechtigten Mobiltelefon und damit einer berechtigten elektronischen Gesundheitskarte vorliegt.

Wird nach Schritt 414, dem Challenge-Response-Verfahren, in Schritt 416 eine Autorisierung der elektronischen Gesundheitskarte zum Einlösen des elektronischen Rezepts nicht verifiziert, so erfolgt wiederum nach Schritt 416 der Abbruch des Vorgangs zur Benutzer-Authentifizierung in Schritt 418. Wurde jedoch eine erfolgreiche Verifikation in Schritt 416 durchgeführt, so ist in Schritt 420 ein Datenaustausch zwischen dem Datenverarbeitungssystem und dem mobilen Telekommunikationsgerät möglich.

Eine weitere Alternative, nachdem eine Kommunikation in Schritt 400 zwischen dem Datenverarbeitungssystem und dem mobilen Telekommunikationsgerät hergestellt wurde, bietet sich in der Eingabe einer Benutzer-Identifikation am Datenverarbeitungssystem selbst. Dies ist in Schritt 402 gezeigt. Nach Schritt 402 kann daraufhin zur Gewährleistung einer abhörsicheren Übertragung der Benutzer-Identifikation an das mobile Telekommunikationsgerät in Schritt 404 ein Anmeldeschlüsselpaar durch das Mobiltelefon erzeugt werden. In Schritt 406 sendet das Mobiltelefon einen ersten Anmeldeschlüssel des Anmeldeschlüsselpaares an das Datenverarbeitungssystem. Darauf verschlüsselt in Schritt 408 das Datenverarbeitungssystem die eingegebene Benutzer-Identifikation mit dem ersten Anmeldeschlüssel und übermittelt diese in Schritt 410 zurück an das Mobiltelefon. Nach Schritt 410 erfolgt daraufhin wiederum eine Verifikationsüberprüfung mit Schritt 412. Ausschließlich das Mobiltelefon ist auch hier wiederum in der Lage, die mit dem ersten Anmeldeschlüssel verschlüsselte Benutzer-Identifikation zu entschlüsseln, nämlich unter Verwendung des zweiten zum Anmeldeschlüsselpaar zugehörigen Anmeldeschlüssels. In diesem Fall sind vorzugsweise der erste und der zweite Anmeldeschlüssel ein asymmetrisches kryptografisches Schlüsselpaar. Nach Schritt 412 erfolgen wiederum die Schritte 414 des Challenge-Response-Verfahrens, Schritt 416, 418 und 420, wie bereits oben beschrieben.

Eine Alternative zu den Schritten 404 bis 408 nach Eingabe der Benutzer-Identifikation am Datenverarbeitungssystem in Schritt 402 ist auch, in Schritt 422 den öffentlichen Gesundheitskartenschlüssel der Gesundheitskarte zu lesen. Daraufhin erfolgt in Schritt 424 die Verschlüsselung der Benutzer-Identifikation mit diesem gelesenen öffentlichen Gesundheitskartenschlüssel, woraufhin in Schritt 410 die verschlüsselte Benutzer-Identifikation wiederum an das Mobiltelefon gesendet wird. Da ausschließlich das Mobiltelefon im Besitz des privaten Gesundheitskartenschlüssels ist, ist auch nur das Mobiltelefon in der Lage, die Verifikation der Benutzer-Identifikation vorzunehmen. Nach dem Schritt 412 erfolgt ebenfalls wie oben beschrieben, die Durchführung der Schritte 414 bis 420.

### Bezugszeichenliste

- 100: Datenverarbeitungssystem
- 102: Speicher
- 104: Prozessor
- 105: Eingabemittel
- 106: Schnittstelle
- 109: Ausgabemittel
- 110: Programm
- 112: Kommunikationskanal
- 113: Kommunikationskanal
- 114: Netzwerk
- 115: Kommunikationskanal
- 116: mobiles Telekommunikationsgerät
- 118: Speicher
- 119: Computerprogrammprodukt
- 120: zweiter Gesundheitskartenschlüssel
- 122: Gesundheitskartenkennung
- 124: Prozessor
- 126: Schnittstelle
- 128: Vermittlungsserver
- 132: verschlüsseltes medizinisches Datenobjekt
- 134: Rezeptdatenbank
- 136: Datenbank
- 138: erster Gesundheitskartenschlüssel
- 140: zweiter Gesundheitsdienstleisterschlüssel

## Patentansprüche

1. Verfahren zur Entschlüsselung eines medizinischen Datenobjekts (132), wobei das medizinische Datenobjekt mit einem Datenobjektschlüssel verschlüsselt ist, wobei dem medizinischen Datenobjekt eine Signatur und der mit einem ersten Gesundheitskartenschlüssel (138) verschlüsselte Datenobjektschlüssel zugeordnet ist, wobei das medizinische Datenobjekt dem ersten Gesundheitskartenschlüssel (138) zugeordnet ist, mit den folgenden Schritten:
- Aufbau einer sicheren Kommunikationsverbindung zwischen einem Datenverarbeitungssystem (100) und dem mobilen Telekommunikationsgerät (116), wobei das Telekommunikationsgerät (116) zur Verwendung als elektronische Gesundheitskarte ausgebildet ist, wobei der erste Gesundheitskartenschlüssel (138) dem mobilen Telekommunikationsgerät (116) zugeordnet ist,
- Senden des mit dem ersten Gesundheitskartenschlüssel (138) verschlüsselten Datenobjektschlüssels durch das Datenverarbeitungssystem (100) an das Telekommunikationsgerät (116),
- Entschlüsselung des verschlüsselten Datenobjektschlüssels durch das mobile Telekommunikationsgerät (116), wobei die Entschlüsselung mittels eines zweiten Gesundheitskartenschlüssels (120) erfolgt, wobei der erste und der zweite Gesundheitskartenschlüssel (120) ein asymmetrisches kryptografisches Schlüsselpaar bilden,
- Senden des entschlüsselten Datenobjektschlüssels von dem Tetekommunikationsgerät (116) an das Datenverarbeitungssystem (100),
- Entschlüsseln des medizinischen Datenobjekts (132) mit dem entschlüsselten Datenobjektschlüssel durch das Datenverarbeitungssystem (100),
wobei das Verfahren ferner den Schritt des Anmeldens des mobilen Telekommunikationsgeräts (116) an dem Datenverarbeitungssystem (100) umfasst, wobei beim Anmelden des mobilen Telekommunikationsgeräts (116) an dem Datenverarbeitungssystem (100) eine Benutzerauthentifizierung gegenüber dem mobilen Telekommunikationsgerät (116) erfolgt, wobei das Senden des mit dem ersten Gesundheitskartenschlüssel (138) verschlüsselten Datenobjektschlüssels an das mobile Telekommunikationsgerät (116) nur dann erfolgt, wenn die Benutzeridentifikation durch das mobile Telekommunikationsgerät (116) verifiziert wurde, wobei beim Anmelden die folgenden Schritte durch das Datenverarbeitungssystem (100) ausgeführt werden:
- Empfang einer Benutzeridentifikation,
- Senden der Benutzeridentifikation an das mobile Telekommunikationsgerät (116), wobei die Benutzeridentifikation mit dem ersten Gesundheitskartenschlüssel (138) verschlüsselt ist,
wobei beim Anmelden die folgenden Schritte durch das mobile Telekommunikationsgerät (116) ausgeführt werden:
- Empfang der Benutzeridentifikation von dem Datenverarbeitungssystem (100), wobei die Benutzeridentifikation verschlüsselt ist,
- Entschlüsseln der verschlüsselten Benutzeridentifikation mit dem zweiten Gesundheitskartenschlüssel (120).

2. Verfahren zur Entschlüsselung eines medizinischen Datenobjekts (132) durch ein Datenverarbeitungssystem (100), wobei das medizinische Datenobjekt mit einem Datenobjektschlüssel verschlüsselt ist, wobei dem medizinischen Datenobjekt eine Signatur und der mit einem ersten Gesundheitskartenschlüssel (138) verschlüsselte Datenobjektschlüssel zugeordnet ist, wobei das medizinische Datenobjekt dem ersten Gesundheitskartenschlüssei (138) zugeordnet ist, mit den folgenden Schritten:
- Aufbau einer sicheren Kommunikationsverbindung mit einem mobilen Telekommunikationsgerät (116), wobei das Telekommunikationsgerät (116) zur Verwendung als elektronische Gesundheitskarte ausgebildet ist, wobei der erste Gesundheitskartenschlüssel (138) dem mobilen Telekommunikationsgerät (116) zugeordnet ist,
- Senden des mit dem ersten Gesundheitskartenschlüssel (138) verschlüsselten Datenobjektschlüssels an das Telekommunikationsgerät (116),
- Empfangen des entschlüsselten Datenobjektschlüssels von dem Telekommunikationsgerät (116),
- Entschlüsseln des medizinischen Datenobjekts (132) mit dem entschlüsselten Datenobjektschlüssel,
wobei das Verfahren ferner den Schritt des Anmeldens des mobilen Telekommunikationsgeräts (116) an dem Datenverarbeitungssystem (100) umfasst, wobei beim Anmelden des mobilen Telekommunikationsgeräts (116) an dem Datenverarbeitungssystem (100) eine Benutzerauthentifizierung gegenüber dem mobilen Telekommunikationsgerät (116) erfolgt, wobei das Senden des mit dem ersten Gesundheitskartenschlüssel (138) verschlüsselten Datenobjektschlüssels an das mobile Telekommunikationsgerät (116) nur dann erfolgt, wenn die Benutzeridentifikation durch das mobile Telekommunikationsgerät (116) verifiziert wurde, wobei beim Anmelden die folgenden Schritte durch das Datenverarbeitungssystem (100) ausgeführt werden:
- Empfang einer Benutzeridentifikation,
- Senden der Benutzeridentifikation an das mobile Telekommunikationsgerät (116), wobei die Benutzeridentifikation mit dem ersten Gesundheitskartenschlüssel (138) verschlüsselt ist.

3. Verfahren nach Anspruch 2, wobei der Anmeldeschlüssel von dem mobilen Telekommunikationsgerät (116) abgerufen wird oder wobei beim Anmelden eine eindeutige Gesundheitskartenkennung (122) vom mobilen Telekommunikationsgerät (116) empfangen wird und der erste Gesundheitskartenschlüssel (138) anhand der eindeutigen Gesundheitskartenkennung (122) von einer externen Datenbank (136) abgerufen wird.

4. Verfahren nach einem der vorigen Ansprüche 2 bis 3, wobei die Kommunikation zwischen dem Datenverarbeitungssystem (100) und dem mobilen Telekommunikationsgerät (116) drahtlos erfolgt.

5. Verfahren nach Anspruch 4, wobei der Aufbau der sicheren Kommunikationsverbindung erfolgt mit den folgenden Schritten:
- Empfangen einer Kommunikationsanfrage von dem mobilen Telekommunikationsgerät,
- Senden einer Kontaktadresse des Datenverarbeitungssystems (100) an das mobile Telekommunikationsgerät als Antwort auf die Kommunikationsanfrage,
- Aufbau der Kommunikationsverbindung mit dem mobilen Telekommunikationsgerät über die Kontaktadresse des Datenverarbeitungssystems (100).

6. Verfahren nach Anspruch 4, wobei der Aufbau der sicheren Kommunikationsverbindung erfolgt mit den folgenden Schritten:
- Empfangen einer Kommunikationsanfrage von dem mobilen Telekommunikationsgerät,
- Senden einer Vorgangskennung an das mobile Telekommunikationsgerät, wobei die Vorgangskennung eindeutig dem Datenverarbeitungssystem (100) zugeordnet ist,
- Aufbau der Kommunikationsverbindung mit dem mobilen Telekommunikationsgerät über einen zentralen Server (128).

7. Verfahren nach Anspruch 4, wobei der Aufbau der sicheren Kommunikationsverbindung erfolgt mit den folgenden Schritten:
- Empfangen einer Kommunikationsanfrage von dem mobilen Telekommunikationsgerät, wobei die Kommunikationsanfrage eine Kontaktadresse des mobilen Telekommunikationsgeräts (116) umfasst,
- Aufbau der Kommunikationsverbindung mit dem mobilen Telekommunikationsgerät über die Kontaktadresse des mobilen Telekommunikationsgeräts (116).

8. Verfahren nach Anspruch 4, wobei der Aufbau der sicheren Kommunikationsverbindung erfolgt mit den folgenden Schritten:
- Empfangen einer Kommunikationsanfrage von dem mobilen Telekommunikationsgerät,
- Aufbau der Kommunikationsverbindung mit dem mobilen Telekommunikationsgerät (116) als Antwort auf den Empfang der Kontaktadresse des mobilen Telekommunikationsgeräts (116), wobei das Empfangen der Kommunikationsanfrage und der Aufbau der Kommunikationsverbindung über eine Nahfeldverbindung erfolgt.

9. Verfahren nach einem der vorigen Ansprüche 2 bis 8, ferner mit dem Schritt des Abrufens des verschlüsselten medizinischen Datenobjekts (132) und der dem medizinischen Datenobjekt zugeordneten Signatur und der dem medizinischen Datenobjekt zugeordneten mit dem ersten Gesundheitskartenschlüssel (138) verschlüsselten Datenobjektschlüssels von einer Rezeptdatenbank, wobei das Abrufen anhand der eindeutigen Gesundheitskartenkennung (122) erfolgt.

10. Computerprogrammprodukt (110) mit von einem Prozessor ausführbaren Instruktionen zur Durchführung der Verfahrensschritte nach einem der vorigen Ansprüche 2 bis 9.

11. Datenverarbeitungssystem (100) mit Mitteln zur Durchführung der Verfahrensschritte nach einem der vorigen Ansprüche 2 bis 9.

12. Datenverarbeitungssystem (100) nach Anspruch 11, wobei es sich bei dem Datenverarbeitungssystem (100) um ein Arztinformationssystem oder ein Krankenhausinformationssystem oder ein Apothekeninformationssystem handelt.

13. Verfahren zur Entschlüsselung eines verschlüsselten Datenobjektschlüssels, wobei die Entschlüsselung durch ein mobiles Telekommunikationsgerät (116) erfolgt, wobei das Telekommunikationsgerät (116) zur Verwendung als elektronische Gesundheitskarte ausgebildet ist, mit den folgenden Schritten:
- Aufbau eines sicheren Kommunikationskanals mit einem Datenverarbeitungssystem (100) eines Gesundheitsdienstleisters,
- Empfangen des verschlüsselten Datenobjektschlüssels von dem Datenverarbeitungssystem (100),
- Auslesen eines zweiten Gesundheitskartenschlüssels (120) aus einem Speicher des Telekommunikationsgeräts (116),
- Entschlüsseln des Datenobjektschlüssels mittels des zweiten Gesundheitskartenschlüssels (120),
- Senden des entschlüsselten Datenobjektschlüssels an das Datenverarbeitungssystem (100),
wobei das Verfahren ferner den Schritt des Anmeldens des mobilen Telekommunikationsgeräts (116) an dem Datenverarbeitungssystem (100) umfasst, wobei beim Anmelden des mobilen Telekommunikationsgeräts (116) an dem Datenverarbeitungssystem (100) eine Benutzerauthentifizierung gegenüber dem mobilen Telekommunikationsgerät (116) erfolgt, wobei das Entschlüsseln des Datenobjektschlüssels nur dann erfolgt, wenn die Benutzeridentifikation verifiziert wurde, wobei beim Anmelden die folgenden Schritte durch das mobile Telekommunikationsgerät (116) ausgeführt werden:
- Empfang der Benutzeridentifikation von dem Datenverarbeitungssystem (100), wobei die Benutzeridentifikation verschlüsselt ist,
- Entschlüsseln der verschlüsselten Benutzeridentifikation mit dem zweiten Gesundheitskartenschlüssel (120).

14. Computerprogrammprodukt mit von einem Prozessor ausführbaren Instruktionen zur Durchführung der Verfahrensschritte nach Anspruch 13.

15. Mobiles Telekommunikationsgerät (116) mit Mitteln zur Durchführung der Verfahrensschritte nach Anspruch 13.

## Claims

1. Method for the decryption of a medical data object (132), wherein the medical data object is encrypted with a data object key, wherein the medical data object has, associated with it, a signature and the data object key encrypted with a first health card key (138), wherein the medical data object is associated with the first health card key (138), having the following steps:
- a secure communication link is set up between a data processing system (100) and a mobile telecommunication appliance (116), wherein the telecommunication appliance (116) is designed for use as an electronic health card, wherein the first health card key (138) is associated with the mobile telecommunication appliance (116),
- the data object key encrypted with the first health card key (138) is sent to the telecommunication appliance (116) by the data processing system (100),
- the encrypted data object key is decrypted by the mobile telecommunication appliance (116), wherein the decryption is effected using a second health card key (120), wherein the first and second health card keys (120) form an asymmetric cryptographic key pair,
- the decrypted data object key is sent from the telecommunication appliance (116) to the data processing system (100),
- the medical data object (132) is decrypted with the decrypted data object key by the data processing system (100),
wherein the method also comprises the step of registration of the mobile telecommunication appliance (116) on the data processing system (100), wherein the registration of the mobile telecommunication appliance (116) on the data processing system (100) involves user authentication to the mobile telecommunication appliance (116), wherein the data object key encrypted with the first health card key (138) is sent to the mobile telecommunication appliance (116) only when the user identification has been verified by the mobile telecommunication appliance (116), wherein the registration involves the following steps being performed by the data processing system (100):
- a user identification is received,
- the user identification is sent to the mobile telecommunication appliance (116), wherein the user identification is encrypted with the first health card key (138),
wherein the registration involves the following steps being performed by the mobile telecommunication appliance (116) :
- the user identification is received from the data processing system (100), wherein the user identification is encrypted,
- the encrypted user identification is decrypted with the second health card key (120).

2. Method for the decryption of a medical data object (132) by a data processing system (100), wherein the medical data object is encrypted with a data object key, wherein the medical data object has, associated with it, a signature and the data object key encrypted with a first health card key (138), wherein the medical data object is associated with the first health card key (138), having the following steps:
- a secure communication link is set up to a mobile telecommunication appliance (116), wherein the telecommunication appliance (116) is designed for use as an electronic health card, wherein the first health card key (138) is associated with the mobile telecommunication appliance (116),
- the data object key encrypted with the first health card key (138) is sent to the telecommunication appliance (116),
- the decrypted data object key is received from the telecommunication appliance (116),
- the medical data object (132) is decrypted with the decrypted data object key,
wherein the method also comprises the step of registration of the mobile telecommunication appliance (116) on the data processing system (100), wherein the registration of the mobile telecommunication appliance (116) on the data processing system (100) involves user authentication to the mobile telecommunication appliance (116), wherein the data object key encrypted with the first health card key (138) is sent to the mobile telecommunication appliance (116) only when the user identification has been verified by the mobile telecommunication appliance (116), wherein the registration involves the following steps being performed by the data processing system (100):
- a user identification is received,
- the user identification is sent to the mobile telecommunication appliance (116), wherein the user identification is encrypted with the first health card key (138).

3. Method according to Claim 2, wherein the registration key is retrieved from the mobile telecommunication appliance (116) or wherein the registration involves an explicit health card identifier (122) being received from the mobile telecommunication appliance (116) and the first health card key (138) being retrieved from an external database (136) using the explicit health card identifier (122).

4. Method according to one of the preceding Claims 2 to 3, wherein the communication between the data processing system (100) and the mobile telecommunication appliance (116) takes place wirelessly.

5. Method according to Claim 4, wherein the secure communication link is set up using the following steps:
- a communication request is received from the mobile telecommunication appliance,
- a contact address for the data processing system (100) is sent to the mobile telecommunication appliance in response to the communication request,
- the communication link to the mobile telecommunication appliance is set up using the contact address of the data processing system (100).

6. Method according to Claim 4, wherein the secure communication link is set up using the following steps:
- a communication request is received from the mobile telecommunication appliance,
- a process identifier is sent to the mobile telecommunication appliance, wherein the process identifier is explicitly associated with the data processing system (100),
- the communication link to the mobile telecommunication appliance is set up via a central server (128).

7. Method according to Claim 4, wherein the secure communication link is set up using the following steps:
- a communication request is received from the mobile telecommunication appliance, wherein the communication request comprises a contact address for the mobile telecommunication appliance (116),
- the communication link to the mobile telecommunication appliance is set up using the contact address of the mobile telecommunication appliance (116).

8. Method according to Claim 4, wherein the secure communication link is set up using the following steps:
- a communication request is received from the mobile telecommunication appliance,
- the communication link to the mobile telecommunication appliance (116) is set up in response to the reception of the contact address of the mobile telecommunication appliance (116), wherein the communication request is received and the communication link is set up using a short range connection.

9. Method according to one of the preceding Claims 2 to 8, also having the step of the encrypted medical data object (132) and the signature associated with the medical data object and the data object key which is associated with the medical data object and which is encrypted with the first health card key (138) being retrieved from a prescription database, wherein the retrieval is performed using the explicit health card identifier (122).

10. Computer program product (110) having instructions which can be executed by a processor for the purpose of performing the method steps according to one of the preceding Claims 2 to 9.

11. Data processing system (100) having means for performing the method steps according to one of the preceding Claims 2 to 9.

12. Data processing system (100) according to Claim 11, wherein the data processing system (100) is a doctor information system or a hospital information system or a pharmacy information system.

13. Method for the decryption of an encrypted data object key, wherein the decryption is performed by a mobile telecommunication appliance (116), wherein the telecommunication appliance (116) is designed for use as an electronic health card, having the following steps:
- a secure communication channel is set up to a data processing system (100) of a health service provider,
- the encrypted data object key is received from the data processing system (100),
- a second health card key (120) is read from a memory in the telecommunication appliance (116),
- the data object key is decrypted using the second health card key (120),
- the decrypted data object key is sent to the data processing system (100),
wherein the method also comprises the step of registration of the mobile telecommunication appliance (116) on the data processing system (100), wherein the registration of the mobile telecommunication appliance (116) on the data processing system (100) involves user authentication to the mobile telecommunication appliance (116), wherein the data object key is decrypted only when the user identification has been verified, wherein the registration involves the following steps being performed by the mobile telecommunication appliance (116) :
- the user identification is received from the data processing system (100), wherein the user identification is encrypted,
- the encrypted user identification is decrypted with the second health card key (120).

14. Computer program product having instructions which can be executed by a processor for the purpose of performing the method steps according to Claim 13.

15. Mobile telecommunication appliance (116) having means for performing the method steps according to Claim 13.

## Revendications

1. Procédé de décryptage d'un objet de données médicales (132), l'objet de données médicales étant crypté avec une clé d'objet de données, une signature et la clé d'objet de données cryptée avec une première clé de carte de santé (138) étant associées à l'objet de données médicales, l'objet de données médicales étant associé à la première clé de carte de santé (138), comprenant les étapes suivantes :
- Établissement d'une liaison de communication sécurisée entre un système de traitement de données (100) et un appareil de télécommunication mobile (116), l'appareil de télécommunication mobile (116) étant configuré pour être utilisé comme une carte de santé électronique, la première clé de carte de santé (138) étant associée à l'appareil de télécommunication mobile (116),
- Envoi de la clé d'objet de données cryptée avec la première clé de carte de santé (138) à l'appareil de télécommunication mobile (116) par le système de traitement de données (100),
- Décryptage de la clé d'objet de données cryptée par l'appareil de télécommunication mobile (116), le décryptage étant effectué au moyen d'une deuxième clé de carte de santé (120), la première et la deuxième clé de carte de santé (120) formant une paire de clés cryptographiques asymétriques,
- Envoi de la clé d'objet de données décryptée de l'appareil de télécommunication mobile (116) au système de traitement de données (100),
- Décryptage de l'objet de données médicales (132) avec la clé d'objet de données décryptée par le système de traitement de données (100),
le procédé comprenant en outre l'étape de déclaration de l'appareil de télécommunication mobile (116) auprès du système de traitement de données (100), une authentification de l'utilisateur par rapport à l'appareil de télécommunication mobile (116) étant effectuée lors de la déclaration de L'appareil de télécommunication mobile (116) auprès du système de traitement de données (100), l'envoi à l'appareil de télécommunication mobile (116) de la clé d'objet de données cryptée avec la première clé de carte de santé (138) n'étant effectué que lorsque l'identification d'utilisateur a été vérifiée par l'appareil de télécommunication mobile (116), les étapes suivantes étant exécutées par le système de traitement de données (100) lors de la déclaration :
- Réception d'une identification d'utilisateur,
- Envoi de l'identification d'utilisateur à l'appareil de télécommunication mobile (116), l'identification d'utilisateur étant cryptée avec la première clé de carte de santé (138),
les étapes suivantes étant exécutées par l'appareil de télécommunication mobile (116) lors de la déclaration :
- Réception de l'identification d'utilisateur par le système de traitement de données (100), l'identification d'utilisateur étant cryptée,
- Décryptage de l'identification d'utilisateur cryptée avec la deuxième clé de carte de santé (120).

2. Procédé de décryptage d'un objet de données médicales (132) par un système de traitement de données (100), l'objet de données médicales étant crypté avec une clé d'objet de données, une signature et la clé d'objet de données cryptée avec une première clé de carte de santé (138) étant associées à l'objet de données médicales, l'objet de données médicales étant associé à la première clé de carte de santé (138), comprenant les étapes suivantes :
- Établissement d'une liaison de communication sécurisée avec un appareil de télécommunication mobile (116), l'appareil de télécommunication mobile (116) étant configuré pour être utilisé comme une carte de santé électronique, la première clé de carte de santé (138) étant associée à l'appareil de télécommunication mobile (116),
- Envoi de la clé d'objet de données cryptée avec la première clé de carte de santé (138) à l'appareil de télécommunication mobile (116),
- Réception de la clé d'objet de données cryptée par l'appareil de télécommunication mobile (116),
- Décryptage de l'objet de données médicales (132) avec la clé d'objet de données décryptée,
le procédé comprenant en outre l'étape de déclaration de l'appareil de télécommunication mobile (116) auprès du système de traitement de données (100), une authentification de l'utilisateur par rapport à l'appareil de télécommunication mobile (116) étant effectuée lors de la déclaration de l'appareil de télécommunication mobile (116) auprès du système de traitement de données (100), l'envoi à l'appareil de télécommunication mobile (116) de la clé d'objet de données cryptée avec la première clé de carte de santé (138) n'étant effectué que lorsque l'identification d'utilisateur a été vérifiée par l'appareil de télécommunication mobile (116), les étapes suivantes étant exécutées par le système de traitement de données (100) lors de la déclaration :
- Réception d'une identification d'utilisateur,
- Envoi de l'identification d'utilisateur à l'appareil de télécommunication mobile (116), l'identification d'utilisateur étant cryptée avec la première clé de carte de santé (138).

3. Procédé selon la revendication 2, selon lequel la clé de déclaration est invoquée par l'appareil de télécommunication mobile (116) et un identifiant de carte de santé univoque (122) est reçu par l'appareil de télécommunication mobile (116) lors de la déclaration et la première clé de carte de santé (138) est invoquée auprès d'une base de données externe (136) au moyen de l'identifiant de carte de santé univoque (122).

4. Procédé selon l'une des revendications précédentes 2 et 3, selon lequel la communication entre le système de traitement de données (100) et l'appareil de télécommunication mobile (116) s'effectue sans fil.

5. Procédé selon la revendication 4, selon lequel l'établissement de la liaison de communication sécurisée est réalisé avec les étapes suivantes :
- Réception d'une demande de communication de la part de l'appareil de télécommunication mobile,
- Envoi d'une adresse de contact du système de traitement de données (100) à l'appareil de télécommunication mobile comme réponse à la demande de communication,
- Établissement de la liaison de communication avec l'appareil de télécommunication mobile par le biais de l'adresse de contact du système de traitement de données (100).

6. Procédé selon la revendication 4, selon lequel l'établissement de la liaison de communication sécurisée est réalisé avec les étapes suivantes :
- Réception d'une demande de communication de la part de l'appareil de télécommunication mobile,
- Envoi d'un identifiant d'opération à l'appareil de télécommunication mobile, l'identifiant d'opération étant univoquement associé au système de traitement de données (100),
- Établissement de la liaison de communication avec l'appareil de télécommunication mobile par le biais d'un serveur central (128).

7. Procédé selon la revendication 4, selon lequel l'établissement de la liaison de communication sécurisée est réalisé avec les étapes suivantes :
- Réception d'une demande de communication de la part de l'appareil de télécommunication mobile, la demande de communication comprenant une adresse de contact de l'appareil de télécommunication mobile (116),
- Établissement de la liaison de communication avec l'appareil de télécommunication mobile par le biais de l'adresse de contact de l'appareil de télécommunication mobile (116).

8. Procédé selon la revendication 4, selon lequel l'établissement de la liaison de communication sécurisée est réalisé avec les étapes suivantes :
- Réception d'une demande de communication de la part de l'appareil de télécommunication mobile,
- Établissement de la liaison de communication avec l'appareil de télécommunication mobile (116) en tant que réponse à la réception de l'adresse de contact de l'appareil de télécommunication mobile (116), la réception de la demande de communication et l'établissement de la liaison de communication s'effectuant par le biais d'une liaison de champ proche.

9. Procédé selon l'une des revendications précédentes 2 à 8, lequel comprend en outre l'étape d'invocation de l'objet de données médicales (132) crypté et de la signature associée à l'objet de données médicales ainsi que de la clé d'objet de données cryptée avec la première clé de carte de santé (138) associée à l'objet de données médicales auprès d'une base de données d'ordonnances, l'invocation étant effectuée au moyen de l'identifiant de carte de santé univoque (122).

10. Produit de programme informatique (110) comprenant des instructions exécutables par un processeur pour exécuter les étapes du procédé selon l'une des revendications précédentes 2 à 9.

11. Système de traitement de données (100) comprenant des moyens pour mettre en oeuvre les étapes du procédé selon l'une des revendications précédentes 2 à 9.

12. Système de traitement de données (100) selon la revendication 11, le système de traitement de données (100) étant un système d'information pour médecin ou un système d'information pour hôpital ou un système d'information pour pharmacie.

13. Procédé de décryptage d'une clé d'objet de données cryptée, le décryptage étant réalisé par le biais d'un appareil de télécommunication mobile (116), l'appareil de télécommunication mobile (116) étant configuré pour être utilisé comme une carte de santé électronique, comprenant les étapes suivantes :
- Établissement d'un canal de communication sécurisé avec un système de traitement de données (100) d'un prestataire de services de santé,
- Réception de la clé d'objet de données cryptée par le système de traitement de données (100),
- Lecture d'une deuxième clé de carte de santé (120) depuis une mémoire de l'appareil de télécommunication mobile (116),
- Décryptage de la clé d'objet de données au moyen de la deuxième clé de carte de santé (120),
- Envoi de la clé d'objet de données décryptée au système de traitement de données (100),
le procédé comprenant en outre l'étape de déclaration de l'appareil de télécommunication mobile (116) auprès du système de traitement de données (100), une authentification de l'utilisateur par rapport à l'appareil de télécommunication mobile (116) étant effectuée lors de la déclaration de l'appareil de télécommunication mobile (116) auprès du système de traitement de données (100), le décryptage de la clé d'objet de données n'étant effectué que lorsque l'identification d'utilisateur a été vérifiée, les étapes suivantes étant exécutées par l'appareil de télécommunication mobile (116) lors de la déclaration :
- Réception de l'identification d'utilisateur de la part du système de traitement de données (100), l'identification d'utilisateur étant cryptée,
- Décryptage de l'identification d'utilisateur cryptée avec la deuxième clé de carte de santé (120).

14. Produit de programme informatique comprenant des instructions exécutables par un processeur pour exécuter les étapes du procédé selon la revendication 13.

15. Appareil de télécommunication mobile (116) comprenant des moyens pour exécuter les étapes du procédé selon la revendication 13.
